# FASCICULE DE BREVET EUROPEEN

(11) **EP 1 501 765 B1**
(45) Date de publication et mention de la délivrance du brevet: **21.06.2006**
(21) Numéro de dépôt: 03749912.6
(22) Date de dépôt: 30.04.2003
(51) Int. Cl.: C02F 1/64, B01J 23/34, B01D 24/24, B01J 20/06

(54) **PROCEDE DE TRAITEMENT DES EAUX CONTENANT DU FER, DU MANGANESE ET DE L ARSENIC.**
VERFAHREN ZUR BEHANDLUNG VON EISEN, MANGAN UND ARSEN ENTHALTENDEM WASSER
METHOD FOR TREATING WATER CONTAINING IRON, MANGANESE AND ARSENIC

(30) Priorité: 07.05.2002 FR 0205754
(43) Date de publication de la demande: 02.02.2005
(73) Titulaire: OTV S.A., 94417 Saint-Maurice Cédex (FR)
(72) Inventeur: GAID, Abdelkader, F-75014 PARIS (FR)
(74) Mandataire: Larcher, Dominique
(86) Numéro de dépôt international: PCT/FR2003/001369
(87) Numéro de publication internationale: WO 2003/095372

(56) Documents cités:
- GB-A- 471 277
- GB-A- 1 361 827
- US-A- 2 145 901
- US-A- 4 551 254
- US-A- 5 635 073

## Description

La présente invention concerne un procédé de traitement des eaux. Plus précisément, l'invention concerne un procédé de potabilisation des eaux destinées à la consommation humaine, en vue d'en éliminer le fer, le manganèse et l'arsenic.

Le principe de l'élimination du fer repose sur son oxydation et sur la rétention des oxydes insolubles ainsi formés (Fe(OH)₃, Fe₂O₃). L'oxydation à l'oxygène, ou avec d'autres oxydants chimiques envisageables tels que le chlore, le bioxyde de chlore, le permanganate de potassium ou l'ozone, est nécessaire pour atteindre les potentiels d'oxydo-réduction suffisants. L'oxydant le plus couramment utilisé dans ce cadre est le permanganate de potassium.

Le principe de l'élimination de l'arsenic repose sur son oxydation chimique et sur son adsorption sur des hydroxydes métalliques insolubles (fer ou aluminium en général).

Le procédé physico-chimique traditionnel de démanganisation et déferrisation des eaux consiste à oxyder chimiquement le manganèse et/ou le fer contenu dans celles-ci à l'aide de permanganate de potassium, de chlore ou d'ozone, puis à les filtrer sur un matériau granulaire tel que, par exemple du sable. Celui-ci peut s'enrober de précipités de bioxyde de manganèse au bout de quelques mois et former ce que l'on appelle un "green sand " naturel. Ce "green sand" peut également être préparé en déposant préalablement un film de bioxyde de manganèse hydraté sur la surface d'un support pouvant être du sable, de l'argile acide, de l'anthracite, de la zéolite, un matériau dolomitique, etc... Le bioxyde de manganèse est alors considéré comme jouant un rôle de catalyseur.

Ce type de procédé présente l'inconvénient majeur de nécessiter l'ajout en entrée d'un oxydant puissant tel que du permanganate de potassium, du chlore libre ou de l'ozone.

On peut aussi préparer un matériau granulaire en partant d'un matériau principalement inerte. Combiné avec du bioxyde de manganèse et/ou un oxyde de fer (par exemple Fe₃O₄) finement divisés, l'ensemble est lié par un ciment afin d'obtenir des granulés de taille comprise entre 10 et 60 mesh, tel que décrit dans les brevets publiés sous les numéros US-2 145 901 et GB- 471 277.

Ce type de procédé ne nécessite pas l'ajout d'oxydant. En revanche, il nécessite une fabrication spécifique du matériau granulaire, ce qui implique des équipements particuliers pour ce faire, induisant des investissements en conséquence, auxquels il faut prévoir d'ajouter le coût de préparation du matériau granulaire.

L'invention a notamment pour objectif de pallier les inconvénients ou les insuffisances de l'art antérieur.

Plus précisément, l'invention a pour objectif de proposer un procédé physico-chimique de traitement des eaux qui permette d'obtenir une élimination efficace du fer, du manganèse et de l'arsenic contenu dans les eaux, et ce sans ajout d'oxydant puissant.

L'invention a également pour objectif de fournir un tel procédé pour lequel la préparation du matériau filtrant est notablement simplifié par rapport à l'art antérieur.

Un autre objectif de l'invention est de fournir un tel procédé physico-chimique qui mette en oeuvre un matériau filtrant ne nécessitant pas de régénération chimique, notamment par un oxydant.

L'invention a aussi pour objectif de fournir un procédé pour le traitement des eaux qui n'engendre pas ou très peu de perte de matériau filtrant.

Un autre objectif de l'invention est de proposer un tel procédé qui mette en oeuvre un matériau filtrant pouvant être un résidu provenant par exemple directement de l'industrie minière, ne nécessitant qu'un simple traitement mécanique préalablement à son exploitation.

Encore un autre objectif de l'invention est de fournir un tel procédé de traitement des eaux pouvant être mis en oeuvre sur des eaux présentant des teneurs variables et saisonnières de fer, de manganèse et d'arsenic dissous dans les eaux.

L'invention a également pour objectif de proposer un tel procédé qui soit économique et simple de mise en oeuvre.

Ces objectifs, ainsi que d'autres qui apparaîtront par la suite sont atteints à l'aide d'un procédé de traitement des eaux en vue d'abattre notamment leur teneur en fer, manganèse et arsenic, caractérisé en ce qu'il comprend une étape consistant à faire transiter lesdites eaux sur au moins un lit de matériau filtrant comprenant une association :
- d'au moins un matériau divisé à base de fer à J'état d'hydroxyde ou à l'état métallique se présentant sous forme de particules de dimensions comprises entre 0,3 mm et 2 mm
- de grains de bioxyde de manganèse ayant une densité apparente de l'ordre de 2 et une dureté supérieure à 6 sur l'échelle de Mohs.

On notera que l'on entend dans le cadre de la présente description les termes "densité apparente de l'ordre de 2" comme désignant une densité apparente pouvant en pratique varier de 1,7 à 2,3.

Selon l'invention, le matériau divisé à base de fer utilisé pourra donc être du fer métallique (valance égale à 0) ou du fer à l'état d'hydroxyde Dans le premier cas, il pourra notamment se présenter sous forme de limaille, de copeaux, de feuilles de fer, etc. Dans le second cas, il pourra s'agir notamment de grains d'hydroxyde ferrique ou de grains d'hydroxyde ferreux.

Une telle association de fer et de bioxyde de manganèse pourra se présenter sous la forme d'un mélange de matériau divisé à base de fer et de grains de bioxyde de manganèse mais aussi sous la forme d'une superposition de couche(s) de matériau divisé à base de fer et de couche(s) de grains de bioxyde de manganèse. Dans ce dernier cas, la couche de matériau divisé à base de fer sera préférentiellement en position supérieure tandis que la couche de grains de bioxyde de manganèse sera préférentiellement en position inférieure.

Lorsque l'on mettra en oeuvre une couche de grains d'hydroxyde ferrique et une couche de grains de bioxyde de manganèse, la couche d'hydroxyde ferrique présentera avantageusement une densité apparente de l'ordre de 1,2 à 1,5.

Les spécificités de densité et de dureté de tels matériaux sélectionnés selon l'invention permettent de maintenir deux couches uniformes et stables de dioxyde de manganèse et d'hydroxyde ferrique ou ferreux. Plus précisément, la dureté supérieure à 6 sur l'échelle de Mohs des grains de bioxyde de manganèse, permet le maintien de la granulométrie initiale et la capacité d'adsorption initiale de ce matériau. De ce fait, on constate une consommation négligeable voire nulle des matériaux, ce qui procure un résultat particulièrement avantageux lié au fait que les matériaux ne sont pas considérés comme des consommables.

Le principe de l'invention est donc basé pour l'élimination du manganèse et de l'arsenic du fer, sur l'utilisation d'une association d'un matériau divisé à base de fer et de grains de bioxyde de manganèse dont la densité et la dureté permettent de retenir le manganèse sans ajout d'oxydant, et sans devoir pratiquer une régénération chimique du matériau, à l'aide d'un composé oxydant.

Un tel procédé permet de traiter efficacement des eaux chargées en fer, manganèse et arsenic à l'aide de ces deux matériaux sélectionnés pour leurs caractéristiques et propriétés. L'ajout d'oxydant fort, tel que le permanganate de potassium, le chlore libre ou l'ozone n'est pas nécessaire, que ce soit pour l'abattement de la teneur en fer, manganèse et arsenic des eaux ou pour la régénération du matériau filtrant, ce qui est en opposition aux pratiques courantes.

En outre, le procédé selon l'invention s'avère particulièrement efficace sans qu'il soit nécessaire de prévoir la préparation spécifique du matériau filtrant consistant à enrober, à l'aide d'un ciment, un matériau inerte avec des grains de bioxyde de manganèse comme c'est le cas dans les solutions antérieures.

Selon une caractéristique remarquable, lorsque le matériau divisé à base de fer utilisé est de l'hydroxyde de fer, celui-ci agit comme un adsorbant.

Selon une autre caractéristique remarquable, le bioxyde de manganèse sélectionné par la Demanderesse agit comme un catalyseur, et également comme un oxydant. Le principe de son action catalytique est similaire à celui de l'effet catalytique obtenu avec un sable manganisé ("green sand"), auquel s'ajoute l'aptitude du matériau à servir de support à l'adsorption du manganèse dissout dans les eaux.

De plus, le bioxyde de manganèse a une action oxydante vis-à-vis du manganèse dissout présent dans l'eau à traiter.

On notera en outre que ce bioxyde de manganèse n'est pas sélectif vis-à-vis du manganèse, et oxyde également le fer ferreux, l'arsenic et le sélénium. Les ions Mn²⁺ et Fe²⁺ sont oxydés par MnO₂, et sont déposés à la surface des grains du milieu filtrant.

La réaction globale d'oxydoréduction se produisant à la surface du matériau, à l'interface solide-liquide conduit à la formation de sesquioxyde de manganèse Mn₂O₃ (solide), à la fois par oxydation du manganèse dissout et par réduction du bioxyde de manganèse solide. Le Mn₂O₃ ainsi produit enrobe progressivement les grains de matériau.

Selon une solution avantageuse, le procédé comprend, lorsque cela est nécessaire, une étape de régénération dudit lit filtrant effectuée par simple lavage, à l'aide d'un courant d'eau et/ou d'un fluide gazeux tel que l'air.

Cette étape de régénération pourra être réalisée périodiquement, en tenant compte notamment des volumes d'eau traités et des variations saisonnières de leur teneur en manganèse.

Selon un autre mode de réalisation, ladite étape de régénération pourra aussi être réalisée lorsque ledit lit de matériau filtrant atteindra une perte de charge prédéterminée.

Un contrôle continu ou par échantillonnage de la teneur résiduelle en manganèse des eaux traitées peut indiquer une perte de charge du matériau de filtration et entraîner une décision de régénérer le lit filtrant.

Selon un premier mode de réalisation de l'étape de régénération, ledit lavage est effectué à contre-courant de l'écoulement de l'eau à traiter au sein dudit lit filtrant.

Selon un deuxième mode de réalisation de l'étape de régénération, ledit lavage est effectué à co-courant de l'écoulement de l'eau à traiter au sein dudit lit filtrant.

Selon une solution préférée, le matériau divisé à base de fer et/ou lesdits grains de bioxyde de manganèse sont associés à au moins un autre matériau choisi parmi les matériaux suivants :
- sable ;
- anthracite ;
- charbon actif en grains ;
- matériau neutralisant.

Avantageusement, le procédé comprend une étape préalable de concassage et de tamisage du bioxyde de manganèse, en vue d'obtenir une granulométrie comprise entre 0,3 et 1 mm.

On note que, selon d'autres modes de réalisation envisageables, le concassage et le tamisage pourront varier pour obtenir une granulométrie différente selon la filtration recherchée.

Préférentiellement, le procédé comprend une étape supplémentaire d'ajustement du pH desdites eaux, par un traitement à l'air, à la soude ou à l'eau de chaux, en amont de l'étape de filtration.

Avantageusement, ladite association comprend en volume entre 5 % et 95 % de matériau divisé à base de fer et entre 95 % et 5 % de grains d'oxyde de manganèse.

Préférentiellement, ladite association comprend environ 70 % de matériau divisé à base de fer et environ 30 % de grains de bioxyde de manganèse.

Selon un mode de réalisation, ladite étape consistant à faire transiter lesdites eaux sur au moins un lit de matériau filtrant est effectuée à la pression atmosphérique, cette étape pouvant alternativement être effectuée sous pression selon un autre mode de réalisation.

Avantageusement, ladite étape consistant à faire transiter lesdites eaux sur au moins un lit de matériau filtrant est effectuée avec un temps de contact allant de 30 secondes à 10 minutes.

Le procédé peut donc être mis en oeuvre tant à l'aide des filtres fonctionnant à la pression atmosphérique qu'à l'aide des filtres fonctionnant sous pression.

D'autres caractéristiques et avantages de l'invention apparaîtront plus clairement à la lecture de la description suivante de plusieurs modes de réalisation de l'invention, donné à titre d'exemples illustratifs et non limitatifs, en référence aux dessins selon lesquels :
- la figure 1 représente un premier mode de réalisation d'une unité industrielle de déferrisation, de démanganisation et d'élimination de l'arsenic selon l'invention dans laquelle l'eau à traiter transite de façon ascendante dans le filtre, et;
- la figure 2 représente un second mode de réalisation d'une unité du même type dans laquelle l'eau à traiter transite de façon descendante dans le filtre.

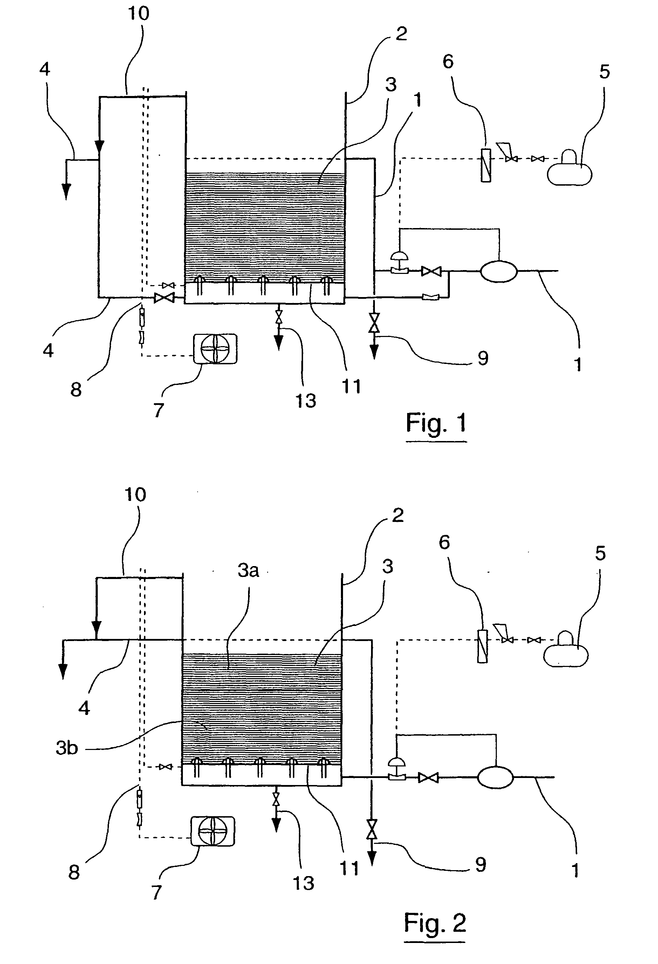

Dans l'unité industrielle de traitement des eaux illustrée schématiquement par la figure 1, les eaux sont amenées par une conduite 1 dans le filtre 2 qui, dans le cas présent, est ouvert, c'est-à-dire à la pression atmosphérique, mais qui pourra être de tout autre type dans d'autres modes de réalisation.

Le filtre contient un lit filtrant constitué d'un mélange d'environ 70 % en volume de grains d'hydroxyde ferrique pour environ 30 % en volume de grains de bioxyde de manganèse. On notera également que, dans d'autres modes de réalisation envisageables, notamment en fonction des teneurs en fer et en manganèse des eaux à traiter, ces proportions pourront par exemple être inversées. Plus généralement, le lit contient en volume 5 à 95 % de fer et 95 à 5 % de manganèse.

Le lit filtrant 3 est supporté par un plancher 11 perforé ou crépiné. On notera par ailleurs que le filtre 2 est pourvu, de façon classique, de moyens de vidange 13.

Dans le cas du filtre ouvert tel que représenté à la figure 1, les eaux s'écoulent par gravité au travers du lit filtrant 3 et sont recueillies à la base du filtre, par une conduite 4 de sortie des eaux traitées. Un trop-plein 10 est prévu en cas de besoin.

En amont de la filtration, les eaux subissent, si nécessaire, une étape d'ajustement du pH, par un traitement à l'air. On procède à cet ajustement si le pH des eaux à traiter est inférieur à 7,2. Un tel ajustement est réalisé à l'aide d'un compresseur d'air 5 et d'un filtre à air 6 reliés à la conduite 1 d'amenée des eaux.

Pour procéder à la régénération du matériau filtrant, l'unité comprend un surpresseur d'air de lavage 7 relié à une conduite 8 débouchant à la base du filtre 2.

De cette façon, l'air de lavage est envoyé en même temps ou séparément de l'eau de lavage dans le lit filtrant 3 à contre-courant des eaux à traiter. Les eaux de lavage sont recueillies par une conduite d'évacuation 9.

Pour montrer l'efficacité du procédé selon l'invention, mis en oeuvre avec l'unité représenté par la figure 1, on a observé l'évolution de la teneur en arsenic et en manganèse des eaux brutes et des eaux traitées par une première application la démanganisation et à l'élimination de l'arsenic d'une eau de surface.

Dans cette unité le temps de contact des eaux avec le lit de filtration est de l'ordre de 3 minutes. Toutefois, le temps de contact pourra être compris dans d'autres modes de réalisation, entre 30 secondes et 10 minutes en fonction du pourcentage d'abattement requis et de la teneur résiduelle recherchée.

Tandis que la teneur en manganèse des eaux brutes varie entre 40 et 410 µg/l, on constate l'efficacité du procédé avec une teneur résiduelle des eaux traitées constamment inférieure à 10 µg/l, soit un abattement allant jusqu'à 97,5%.

Ainsi, on démontre clairement que le procédé qui vient d'être décrit permet d'abattre la teneur en manganèse et en arsenic d'eaux à traiter susceptibles de présenter des variations saisonnières importantes.

Avec des résultats au moins équivalents voire supérieurs aux techniques antérieures, le procédé pour la mise en oeuvre d'un matériau de filtration spécifique, évite :
- le recours aux oxydants tant pour l'étape de filtration que pour la régénération du lit de filtration ;
- le recours à une préparation astreignante et coûteuse d'un matériau filtrant comme c'est le cas avec les solutions antérieures.

En référence à la figure 2, sur laquelle des références identiques à celle de la figure 1 visent dans éléments structurels identiques ou similaires à ceux de la figure 1, l'eau transite non plus de façon descendante dans le lit filtrant mais de façon ascendante dans celui-ci. A cet effet, la canalisation 1 arrive dans la partie inférieure du filtre 2 tandis que la canalisation d'évacuation 4 est prévue dans la partie supérieure de celui-ci.

Le lavage du lit filtrant se fait par injection d'air et/ou d'eau de lavage à co-courant.

Le lit filtrant 3 composé d'une couche supérieure 3a de grains d'hydroxyde ferrique d'une densité d'environ 12 à 1,5 représentant environ 30 % du volume total du lit filtrant 3 et d'une couche inférieure 3b de grains de bioxyde de manganèse d'une densité de l'ordre de 4 et dune dureté Mohs supérieure à 6 représentant environ 70 % du volume total du lit filtrant.

## Revendications

1. Procédé de traitement des eaux en vue d'abattre notamment leur teneur en fer, en manganèse et en arsenic,
**caractérisé en ce qu'**il comprend au moins une étape consistant à faire transiter lesdites eaux sur au moins un lit de matériau filtrant (3) comprenant une association :
- d'au moins un matériau divisé à base de fer à l'état d'hydroxyde ou à l'état métallique se présentant sous forme de particules de dimensions comprises entre 0,3 mm et 2 mm ;
- de grains de bioxyde de manganèse ayant une densité apparente de l'ordre de 2 et une dureté supérieure à 6 sur l'échelle de Mohs.

2. Procédé selon la revendication 1 **caractérisé en ce que** ledit matériau divisé à base de fer utilisé est du fer métallique.

3. Procédé selon la revendication 2 **caractérisé en ce que** le matériau divisé à base de fer utilisé se présente sous forme de limaille et/ou de copeaux et/ou de feuilles.

4. Procédé selon la revendication 1 **caractérisé en ce que** le matériau divisé à base d.e fer utilisé est à l'état d'hydroxyde.

5. Procédé selon la revendication 4 **caractérisé en ce que** le matériau divisé à base de fer utilisé se présente sous forme de grains d'hydroxyde ferrique et/ou d'hydroxyde ferreux.

6. Procédé selon l'une quelconque des revendications 1 à 5 **caractérisé en ce que** ladite association de matériau divisé à base de fer et de grains bioxyde de manganèse se présente sous la forme d'un mélange de matériau divisé à base de fer et de grains de bioxyde de manganèse.

7. Procédé selon l'une quelconque des revendications 1 à 5 **caractérisé en ce que** ladite association de matériau divisé à base de fer et de bioxyde de manganèse se présente sous la forme d'une superposition de couche(s) (3a,3b) de matériau divisé à base de fer et de couche(s) de grains de bioxyde de manganèse.

8. Procédé selon la revendication 7 **caractérisé en ce que** ladite association de matériau divisé à base de fer et de bioxyde de manganèse se présente sous la forme d'une couche supérieure (3a) de matériau divisé à base de fer et d'une couche inférieure (3b) de grains de bioxyde de manganèse.

9. Procédé selon la revendication 8 **caractérisé en ce que** ladite association de matériau divisé à base de fer et de grains de bioxyde de manganèse se présente sous la forme d'une superposition d'une couche supérieure (3a) de grains d'hydroxyde ferrique et d'une couche inférieure (3b) de grains de bioxyde de manganèse.

10. Procédé selon la revendication 9 **caractérisé en ce que** la couche de grains d'hydroxyde ferrique utilisée présente une densité apparente d'environ 1,2 à 1,5.

11. Procédé de traitement des eaux selon l'une quelconque des revendications 1 à 10, **caractérisé en ce qu'**il comprend, lorsque cela est nécessaire, une étape de régénération dudit lit filtrant (3), effectuée par simple lavage, à l'aide d'un courant d'eau et/ou d'un fluide gazeux tel que l'air.

12. Procédé de traitement des eaux selon la revendication 11. **caractérisé en ce que** ledit lavage est effectué à contre-courant de l'écoulement de l'eau à traiter au sein dudit lit filtrant.

13. Procédé de traitement des eaux selon la revendication 11, **caractérisé en ce que** ledit lavage est effectué à co-courant de l'écoulement de l'eau à traiter au sein dudit lit filtrant.

14. Procédé de traitement des eaux selon l'une quelconque des revendications 1 à 13, **caractérisé en ce que** le fer et/ou lesdits grains de bioxyde de manganèse sont associés à au moins un autre matériau choisi parmi les matériaux suivants :
- sable,
- anthracite.
- charbon actif en grains,
- matériau neutralisant.

15. Procédé de traitement des eaux selon l'une quelconque des revendications 1 à 14, **caractérisé en ce qu'**il comprend une étape préalable de concassage et de tamisage du bioxyde de manganèse, en vue d'obtenir une granulométrie comprise entre 0,3 et 1 mm

16. Procédé de traitement des eaux selon l'une quelconque des revendications 1 à 15, **caractérisé en ce que** ladite association de matériau divisé à base de fer et de grains de bioxyde de manganèse comprend en volume entre 5 % et 95% de matériau divisé à base de fer et entre 95 % et 5 % de grains de bioxyde de manganèse.

17. Procédé de traitement des eaux selon la revendication 16, **caractérisé en ce que** ladite association comprend en volume environ 70 % de matériau divisé à base de fer et environ 30% de grains de bioxyde manganèse

18. Procédé de traitement des eaux selon l'une quelconque des revendications 1 à 17, **caractérisé en ce qu'**il comprend une étape supplémentaire d'ajustement du pH desdites eaux, par un traitement à l'air, à la soude ou à l'eau de chaux , en amont de l'étape de filtration.

19. Procédé de traitement des eaux selon l'une quelconque des revendications 1 à 18, **caractérisé en ce que** ladite étape consistant à faire transiter lesdites eaux sur au moins un lit de matériau filtrant est effectuée à la pression atmosphérique.

20. Procédé de traitement des eaux selon l'une quelconque des revendications 1 à 18, **caractérisé en ce** ladite étape consistant à faire transiter lesdites eaux sur au moins un lit de matériau filtrant est effectuée sous pression.

21. Procédé de traitement des eaux selon l'une quelconques des revendications 1 à 20, **caractérisé en ce que** ladite étape consistant à faire transiter lesdites eaux sur au moins un lit de matériau filtrant est effectuée avec un temps de contact allant de 30 secondes à 10 minutes.

## Claims

1. A process for treating water with the aim of reducing in particular the iron, manganese and arsenic content thereof,
**characterised in that** it comprises at least one step involving causing said water to pass through at least one bed of filter material (3) comprising an association:
- of at least one divided material based on iron in the hydroxide state or in the metallic state assuming the form of particles of dimensions of between 0.3 mm and 2 mm;
- of granular manganese dioxide having an apparent density of the order of 2 and a hardness of greater than 6 on the Mohs scale.

2. A process according to claim 1, **characterised in that** said iron-based divided material which is used is metallic iron.

3. A process according to claim 2, **characterised in that** the iron-based divided material which is used assumes the form of iron filings and/or chips and/or flakes.

4. A process according to claim 1, **characterised in that** the iron-based divided material which is used is in the hydroxide state.

5. A process according to claim 4, **characterised in that** the iron-based divided material which is used assumes the form of granular ferric hydroxide and/or ferrous hydroxide.

6. A process according to any one of claims 1 to 5, **characterised in that** said association of iron-based divided material and of granular manganese dioxide assumes the form of a mixture of iron-based divided material and granular manganese dioxide.

7. A process according to any one of claims 1 to 5, **characterised in that** said association of iron-based divided material and of manganese dioxide assumes the form of a superposed arrangement of layer(s) (3a, 3b) of iron-based divided material and layer(s) of granular manganese dioxide.

8. A process according to claim 7, **characterised in that** said association of iron-based divided material and of manganese dioxide assumes the form of an upper layer (3a) of iron-based divided material and a lower layer (3b) of granular manganese dioxide.

9. A process according to claim 8, **characterised in that** said association of iron-based divided material and of granular manganese dioxide assumes the form of a superposed arrangement of an upper layer (3a) of granular ferric hydroxide and a lower layer (3b) of granular manganese dioxide.

10. A process according to claim 9, **characterised in that** the layer of granular ferric hydroxide used exhibits an apparent density of approx. 1.2 to 1.5.

11. A process for treating water according to any one of claims 1 to 10, **characterised in that** it comprises, when necessary, a step of regenerating said filter bed (3), performed by simple washing using a stream of water and/or a gaseous fluid such as air.

12. A process for treating water according to claim 11, **characterised in that** said washing is performed countercurrently to the flow of water to be treated within said filter bed.

13. A process for treating water according to claim 11, **characterised in that** said washing is performed co-currently with the flow of water to be treated within said filter bed.

14. A process for treating water according to any one of claims 1 to 13, **characterised in that** the iron and/or said granular manganese dioxide are associated with at least one other material selected from among the following materials:
- sand,
- anthracite,
- activated charcoal in granular form,
- neutralising material.

15. A process for treating water according to any one of claims 1 to 14, **characterised in that** it comprises a prior step of crushing and screening the manganese dioxide with the aim of obtaining a grain size of between 0.3 and 1 mm.

16. A process for treating water according to any one of claims 1 to 15, **characterised in that** said association of iron-based divided material and of granular manganese dioxide comprises by volume between 5% and 95% of iron-based divided material and between 95% and 5% of granular manganese dioxide.

17. A process for treating water according to claim 16, **characterised in that** said association comprises by volume approx. 70% of iron-based divided material and approx. 30% of granular manganese dioxide.

18. A process for treating water according to any one of claims 1 to 17, **characterised in that** it comprises an additional step of adjusting the pH of said water by treatment with air, sodium carbonate or lime water, upstream from the filtration step.

19. A process for treating water according to any one of claims 1 to 18, **characterised in that** said step involving causing said water to pass through at least one bed of filter material is performed at atmospheric pressure.

20. A process for treating water according to any one of claims 1 to 18, **characterised in that** said step involving causing said water to pass through at least one bed of filter material is performed under pressure.

21. A process for treating water according to any one of claims 1 to 20, **characterised in that** said step involving causing said water to pass through at least one bed of filter material is performed with a contact time ranging from 30 seconds to 10 minutes.

## Patentansprüche

1. Verfahren zur Behandlung von Wasser, insbesondere zum Zweck der Reduzierung seines Eisen-, Mangan- und Arsengehalts,
**dadurch gekennzeichnet, dass** es mindestens einen Schritt umfasst, bei dem das besagte Wasser über mindestens ein Filtermaterialbett (3) geleitet wird, das eine Verbindung enthält von
- mindestens einem zerteilten Material auf Eisenbasis in Hydroxidform oder in metallischer Form, das die Form von Teilchen mit einer Größe von 0,3 mm bis 2 mm aufweist;
- Mangandioxidkörnern besteht, die eine Rohdichte der Größenordnung 2 und auf der Mohsschen Härteskala eine Härte von mehr als 6 aufweisen.

2. Verfahren gemäß Anspruch 1, **dadurch gekennzeichnet, dass** das besagte, zerteilte Material auf Eisenbasis metallisches Eisen ist.

3. Verfahren gemäß Anspruch 2, **dadurch gekennzeichnet, dass** das zerteilte Material auf Eisenbasis die Form von Feilstaub und/oder Spänen und/oder Blättern aufweist.

4. Verfahren gemäß Anspruch 1, **dadurch gekennzeichnet, dass** das zerteilte Material auf Eisenbasis in Form von Hydroxid vorliegt.

5. Verfahren gemäß Anspruch 4, **dadurch gekennzeichnet, dass** das besagte, zerteilte Material auf Eisenbasis in Form von Eisen(III)-hydroxidkörnern und/oder Eisen(II)-hydroxidkörnern vorliegt.

6. Verfahren gemäß einem der Ansprüche 1 bis 5, **dadurch gekennzeichnet, dass** die besagte Verbindung aus zerteiltem Material auf Eisenbasis und Mangandioxydkörnern die Form eines Gemisches aus zerteiltem Material auf Eisenbasis und Mangandioxydkörnern aufweist.

7. Verfahren gemäß einem der Ansprüche 1 bis 5, **dadurch gekennzeichnet, dass** die besagte Verbindung aus zerteiltem Material auf Eisenbasis und Mangandioxyd die Form der Übereinanderlagerung (einer) von Schicht(en) (3a, 3b) aus zerteiltem Material auf Eisenbasis und (einer) Schicht(en) aus Mangandioxydkörnern aufweist.

8. Verfahren gemäß Anspruch 7, **dadurch gekennzeichnet, dass** die besagte Verbindung aus zerteiltem Material auf Eisenbasis und Mangandioxyd die Form einer oberen Schicht (3a) aus zerteiltem Material auf Eisenbasis und einer unteren Schicht (3b) aus Mangandioxydkörnern aufweist.

9. Verfahren gemäß Anspruch 8, **dadurch gekennzeichnet, dass** die besagte Verbindung aus zerteiltem Material auf Eisenbasis und Mangandioxydkörnern die Form der Übereinanderlagerung einer oberen Schicht (3a) aus Eisen(III)-hydroxidkörnern und einer unteren Schicht (3b) aus Mangandioxidkörnern aufweist.

10. Verfahren gemäß Anspruch 9, **dadurch gekennzeichnet, dass** die verwendete Schicht aus Eisen(III)-hydroxidkörnern eine Rohdichte von etwa 1,2 bis 1,5 aufweist.

11. Verfahren zur Wasserbehandlung gemäß einem der Ansprüche 1 bis 10, **dadurch gekennzeichnet, dass** es, falls notwendig, einen Schritt zur Regeneration des besagten Filterbettes (3) umfasst, der durch einfaches Waschen mit Hilfe eines Wasserstroms und/oder eines gasförmigen Mediums wie Luft durchgeführt wird.

12. Verfahren zur Wasserbehandlung gemäß Anspruch 11, **dadurch gekennzeichnet, dass** das besagte Waschen entgegen der Fließrichtung des im besagten Filterbett zu behandelnden Wassers durchgeführt wird.

13. Verfahren zur Wasserbehandlung gemäß Anspruch 11, **dadurch gekennzeichnet, dass** das besagte Waschen entlang der Fließrichtung des im besagten Filterbett zu behandelnden Wassers durchgeführt wird.

14. Verfahren zur Wasserbehandlung gemäß einem der Ansprüche 1 bis 13, **dadurch gekennzeichnet, dass** das Eisen und/oder die besagten Mangandioxydkörner mit mindestens einem anderen Material verbunden sind, das aus den folgenden Materialien ausgewählt wird:
- Sand,
- Anthrazit,
- Aktivkohlekörner
- neutralisierendes Material.

15. Verfahren zur Wasserbehandlung gemäß einem der Ansprüche 1 bis 14, **dadurch gekennzeichnet, dass** es einen vorausgehenden Schritt des Zerkleinerns und Siebens des Mangandioxyds umfasst, um eine Körnergröße zwischen 0,3 und 1 mm zu erhalten.

16. Verfahren zur Wasserbehandlung gemäß einem der Ansprüche 1 bis 15, **dadurch gekennzeichnet, dass** die besagte Verbindung aus zerteiltem Material auf Eisenbasis und Mangandioxydkörnern ein Volumen zwischen 5% und 95% zerteiltem Material auf Eisenbasis und zwischen 95% und 5% Mangandioxydkörnern aufweist.

17. Verfahren zur Wasserbehandlung gemäß Anspruch 16, **dadurch gekennzeichnet, dass** die besagte Verbindung ein Volumen von etwa 70% zerteiltem Material auf Eisenbasis und etwa 30% Mangandioxydkörnern aufweist

18. Verfahren zur Wasserbehandlung gemäß einem der Ansprüche 1 bis 17, **dadurch gekennzeichnet, dass** es vor dem Schritt der Filtration einen zusätzlichen Schritt der Regelung des pH-Wertes des besagten Wassers durch Behandlung mit Luft, Soda oder Kalkwasser umfasst.

19. Verfahren zur Wasserbehandlung gemäß einem der Ansprüche 1 bis 18, **dadurch gekennzeichnet, dass** der besagte Schritt, bei dem das besagte Wasser über mindestens ein Filtermaterialbett geleitet wird, bei atmosphärischem Druck durchgeführt wird.

20. Verfahren zur Wasserbehandlung gemäß einem der Ansprüche 1 bis 18, **dadurch gekennzeichnet, dass** der besagte Schritt, bei dem das besagte Wasser über mindestens ein Filtermaterialbett geleitet wird, unter Druck durchgeführt wird.

21. Verfahren zur Wasserbehandlung gemäß einem der Ansprüche 1 bis 20, **dadurch gekennzeichnet, dass** der besagte Schritt, bei dem das besagte Wasser über mindestens ein Filtermaterialbett geleitet wird, mit einer Kontaktzeit von 30 Sekunden bis 10 Minuten durchgeführt wird.
